# FASCICULE DE BREVET EUROPEEN

(11) **EP 0 551 031 B1**
(45) Date de publication et mention de la délivrance du brevet: **24.04.1996**
(21) Numéro de dépôt: 92403336.8
(22) Date de dépôt: 09.12.1992
(51) Int. Cl.: B23Q 37/00, B23B 39/16, B23Q 11/00, B23Q 3/06, B23Q 11/12

(54) **Tête d'usinage multibroche pour usiner des matériaux composites tels que le carbone**
Mehrspindelkopf zum Bearbeiten von Kompositmaterialien wie Kohlenstoff
Multispindle head for working composite materials such as carbon

(30) Priorité: 11.12.1991 FR 9115336
(43) Date de publication de la demande: 14.07.1993
(73) Titulaire: HISPANO-SUIZA, F-92213 Saint Cloud (FR)
(72) Inventeur: Houlier, Michel Jean Bernard, F-76490 Saint Arnoult (FR); Jousset, Michel, F-76490 La Mailleraye Sur Seine (FR); Schmidt, Bernard Georges James, F-76490 Caudebec en Caux (FR); Suave, Gérard Daniel Antoine, F-76290 Montivilliers (FR); Vigneron, Didier Simon, F-76210 Bolbec (FR)
(74) Mandataire: Berrou, Paul

(56) Documents cités:
- DE-A- 2 535 973
- DE-A- 2 801 305
- DE-A- 3 819 602
- GB-A- 2 163 980
- US-A- 2 807 972
- US-A- 3 587 391
- US-A- 4 932 117

## Description

### DOMAINE DE L'INVENTION

L'invention concerne l'usinage et notamment le perçage d'un très grand nombre de trous sur une grande surface dans une pièce composite en un matériau tel que du carbone. L'invention concerne, en particulier, le perçage de toute la surface intérieure d'un recouvrement acoustique (appelé "peau acoustique") utilisé dans un turboréacteur d'avion. Une telle pièce a un diamètre de l'ordre de un à deux mètres et est en carbone.

### ART ANTERIEUR ET PROBLEME POSE

Dans la conception des turboréacteurs d'avions, on éprouve le besoin d'utiliser une peau acoustique à l'intérieur d'une virole du turboréacteur, notamment au niveau de l'inverseur de poussée. Or, une telle pièce comporte un très grand nombre de trous adjacents dont le diamètre est de l'ordre de un à deux millimètres. La fabrication en petite série de ce type de pièce, qui est en carbone, nécessite d'être exécutée de la façon la plus automatisée possible et la plus rapide possible. Il s'avèrerait en effet fastidieux et beaucoup trop cher de réaliser cette multitude de trous, un par un.

Par suite, selon une technique connue, on utilise une tête d'usinage multibroche pour usiner des pièces à structures composites, contenant des matériaux tels que le carbone, comprenant plusieurs unités d'usinage à grande vitesse de rotation et possédant chacune une broche débouchant sur la même face, pour usiner conjointement plusieurs trous parallèles sur une même surface.

Pour percer les trous dans des matériaux composites en carbone, il est nécessaire de tourner à des vitesses de l'ordre de cinquante à soixante mille tours par minute. En effet, des vitesses de rotation de l'ordre de 1000 à 5000 tours par minute engendrent un phénomène de délaminage dans ce type de structure. Les différentes couches se détachent et l'état de surface du trou n'est pas acceptable. Les poussières engendrées par cet usinage à grandes vitesses sont très volatiles et sont d'autre part nocives.

Par ailleurs, le perçage d'une pièce en matériau composite de carbone de faible épaisseur a tendance à engendrer des vibrations dans cette pièce.

GB-A-2 163 980 décrit une tête d'usinage multibroche de ce type, comprenant, en outre, des moyens de soufflage constitués d'un circuit de distribution constitué principalement d'un flasque d'extrémité qui entoure les extrémités des broches pour distribuer l'air contre ou le long des outils montés à l'extrémité des broches.

On connait par ailleurs par US-A-3 587 391 des moyens d'aspiration de l'air autour de la face d'extrémité où débouchent les broches et des moyens de maintien de la pièce à usiner solidaires de la tête d'usinage constitués par plusieurs billes poussées chacune par un ressort à force constante et susceptibles d'être ainsi reculées vers la tête d'usinage pendant que les outils s'enfoncent dans la pièce à usiner.

Compte tenu de la vitesse de rotation exigée pour le perçage de trous dans des pièces en matériau composite en carbone, il est exclu d'utiliser une tête de perçage comprenant plusieurs broches entraînées par un seul moteur. En effet, l'entraînement de plusieurs broches impose l'utilisation d'engrenages qui sont des éléments mécaniques posant trop de problèmes pour des vitesses de rotation trop importantes. La transmission par engrenage et roue dentée est donc exclue.

En conséquence, selon l'invention les unités d'usinage sont des broches électriques de perçage à haute fréquence, appellées "électrobroches", pour faire tourner les broches à des très hautes vitesses de rotation, comme il est connu par DE-A-2 801 305.

Selon l'invention le refroidissement des broches est assuré grâce à un bain d'huile formé à l'intérieur du carter de la tête d'usinage assurant une circulation d'huile entre une entrée et une sortie.

Dans ce cas, des cloisons ajourées peuvent être placées dans le volume interne pour constituer un labyrinthe vis-à-vis de la circulation d'huile, afin d'homogénéiser le refroidissement des broches.

### LISTES DES FIGURES

L'invention et ses différentes caractéristiques techniques seront mieux comprises à la lecture de la description suivante qui est accompagnée des figures représentant respectivement :
- figure 1, le cadre d'utilisation de la tête d'usinage selon l'invention ;
- figure 2, en coupe, l'extrémité de la tête d'usinage selon l'invention ;
- figure 3, en schéma frontal, la tête d'usinage selon l'invention ;
- figure 4, un schéma électrique symbolisant le circuit de mesure et de contrôle du courant utilisé dans les broches, dans le cas d'utilisation d'électrobroches et le circuit de montée en vitesse des électrobroches ; et
- figure 5, la courbe du courant utilisé dans un exemple d'utilisation de la tête d'usinage selon l'invention.

### DESCRIPTION DETAILLEE D'UNE REALISATION DE L'INVENTION

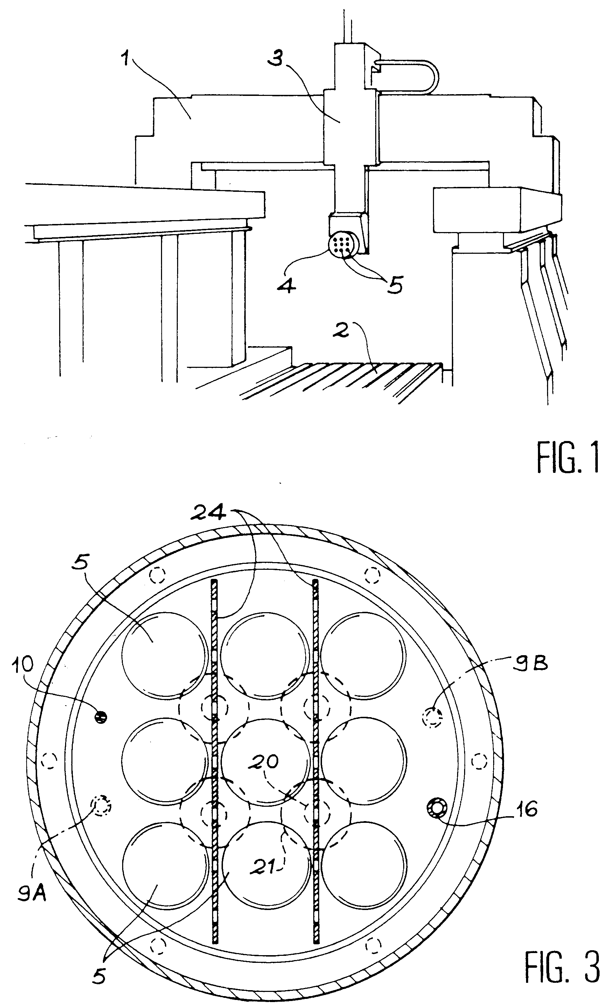

La figure 1 symbolise un centre d'usinage dit "à cinq axes", c'est-à-dire à cinq degrés de liberté pour les outils utilisés. On y distingue un bâti 1, une table de travail 2 sur laquelle peuvent être fixées les pièces à usiner et un bloc d'usinage 3 monté mobile sur le bâti 1. La tête d'usinage selon l'invention 4 est montée sur le bloc d'usinage 3, les outils étant horizontaux, ceci n'étant qu'un exemple de réalisation. Les différents mouvements possibles de la tête d'usinage 4 montée sur le bloc mobile d'usinage 3 peuvent ainsi permettre une grande liberté de mouvement et ainsi donc une grande possibilité dimensionnelle d'usinage sur des pièces complexes. Il est en particulier possible d'usiner des grandes viroles en matériau composite à base de carbone fixées sur la table de travail 2. Il est en particulier possible de percer dans ce genre de pièce, une multitude de trous conjoints, la tête d'usinage pouvant alors avoir accès à tous les endroits de la surface à percer. La forme éventuellement circulaire complexe et gauche d'une virole acoustique pour un turboréacteur amène donc à utiliser, de manière programmée, les différents degrés de liberté de la tête d'usinage 4 montés sur cette machine dans le but de perforer toute la virole.

Comme on a pu le constater sur cette figure 1, la tête d'usinage selon l'invention comprend plusieurs unités d'usinage ayant des broches parallèles. Cette tête d'usinage étant prévue pour percer des matériaux composites, tels que le carbone, ces unités d'usinage ont des broches qui tournent à très grande vitesse. Il est en particulier question de percer les trous de l'ordre de un à deux millimètres avec des vitesses de rotation de l'ordre de quarante mille tours par minute.

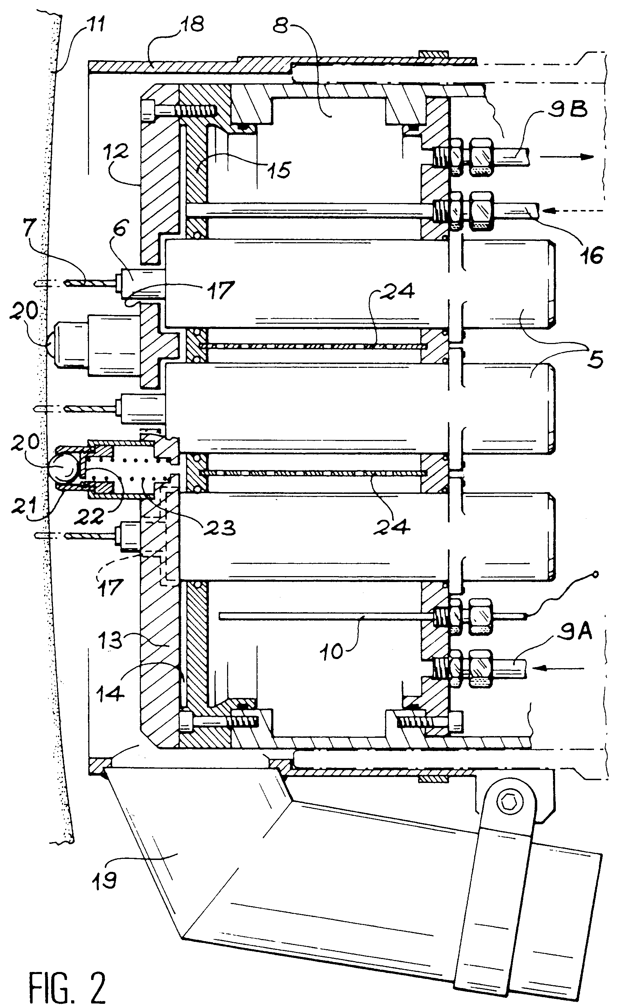

La figure 2 représente en coupe une réalisation préférentielle de la tête d'usinage selon l'invention, c'est-à-dire utilisant comme unité d'usinage des broches électriques 5 tournant à haute fréquence et appelées communément "électrobroches". L'exemple représenté prévoit l'utilisation de neuf électrobroches 5 disposées en carré ; c'est la raison pour laquelle seulement trois électrobroches 5 sont représentées. L'extrémité 6 de chaque broche 5 débouche sur la surface d'extrémité 12 de la partie gauche de la tête d'usinage et est destinée à recevoir un foret 7. Les forets 7 se trouvent donc montés de manière parallèle dans la tête d'usinage.

Compte tenu des vitesses de rotation des électrobroches 5, ces dernières doivent être refroidies au moyen d'une circulation d'huile. A cet effet, les électrobroches sont placées dans un bain d'huile 8 constitué par l'intérieur du carter de la tête d'usinage et équipé d'une entrée d'huile 9A et d'une sortie 9B. Ainsi, une circulation d'huile à l'intérieur de ce volume permet le refroidissement du corps de chacune des électrobroches 5.

Afin de surveiller la température de l'huile, il est préférable de disposer d'un instrument de mesure et de surveillance de la température, tel qu'un thermocouple 10 placé à l'intérieur de ce volume 8.

La pièce à usiner 11 a été représentée légèrement concave pour symboliser le revêtement acoustique d'une grande virole d'un turboréacteur. On constate ainsi que la tête d'usinage devant percer une multitude de trous à l'intérieur de cette forme doit être déplacée en translation le long de la paroi à percer, mais également doit être légèrement tournée pour que la face d'extrémité 12 de la tête d'usinage se trouve toujours positionnée en face de la pièce 11 à percer.

Dans le cadre du perçage de nombreux trous dans une pièce composite en carbone, il s'est avéré nécessaire de ne pas laisser s'échapper les poussières dues à l'usinage. Ces dernières sont en effet très nocives vis-à-vis des opérateurs. Elles sont également nocives vis-à-vis du matériel car elles sont très volatiles et peuvent donc s'introduire à l'intérieur de certains mécanismes en passant entre les pièces. Compte tenu de la rapidité d'intervention de la tête d'usinage selon l'invention dans le cadre du perçage de plusieurs dizaines de milliers de trous sur une même pièce par une même machine à commande numérique, il s'avère pratiquement nécessaire de confiner et d'écarter ces poussières issues des différents perçages. A cet effet, l'invention prévoit d'équiper la tête d'usinage de moyens d'aspiration aux environs et en face de la surface d'extrémité 12 de la tête d'usinage. Ainsi, les extrémités des broches 6 et les forets 7 qu'elles tiennent se verront constamment entourées d'un courant d'air aspirant dans une direction déterminée les poussières d'usinage. Ces moyens d'aspiration permettent également d'éviter un phénomène de "collage" des particules issues du perçage. En effet, compte tenu de certains champs électrostatiques, de telles particules ont tendance à se plaquer contre la pièce à usiner.

Sur la figure 2, ces moyens d'aspiration sont constitués tout d'abord de moyens de soufflage d'air autour des forets 7. Ces moyens sont donc constitués d'un circuit de distribution d'air constitué principalement par un flasque d'extrémité 13 qui entoure les extrémités 6 des broches de perçage 5 en laissant un très léger intervalle autour de ces extrémités 6. Ce flasque d'extrémité 13 définit avec un flasque intérieur correspondant 15 un volume plat 14 entourant toutes les unités d'usinage. Cette cavité 14 est alimentée par une arrivée d'air 16. De ce fait, cette arrivée d'air 16 étant opérationnelle, l'air introduit dans la cavité 14 s'échappe à travers les interstices 17 entourant les extrémités 6 des unités d'usinage 5.

Le courant d'air ainsi créé par ce soufflage d'air est avantageusement complété par des moyens d'aspiration de l'air ainsi soufflé. A cet effet, on prévoit un masque 18 entourant la tête d'usinage. Celui-ci est complété d'une conduite d'aspiration 19 débouchant dans le masque et reliée à une prise de dépression, de manière à collecter l'air ainsi soufflé.

Il s'avère que le perçage d'une pièce relativement mince, telle qu'une peau acoustique en carbone, est sujette à des vibrations relativement importantes lorsqu'on tente de la percer à des vitesses de rotation importantes de l'ordre de plusieurs dizaines de milliers de tours par minute. On éprouve donc dans le cas de la tête d'usinage selon l'invention le besoin de maintenir la pièce à percer. Des moyens de maintien de la pièce sont donc prévus, fixés à la tête d'usinage elle-même.

Ces moyens de maintien de la pièce à percer sont représentés sur la figure 2 principalement par plusieurs billes 20 maintenues chacune dans une cage 21. Elles sont disposées dans ces cages 21 de manière à dépasser et pouvoir prendre appui contre la pièce à percer 11. Le fond de chaque cage 21 est constitué d'une douille 22 qui maintient la bille correspondante plaquée contre la pièce à percer 11 au moyen d'un ressort de pression 23. En choisissant de manière adéquate les ressorts de pression 23, il est ainsi possible d'appliquer une pression constante contre la pièce à percer malgré le fait que les forets 7 s'enfoncent dans la pièce à usiner et que la tête d'usinage portant les cages 21 avance en direction de cette pièce à percer 11. Bien entendu, le diamètre de la bille 20 et l'extrémité de la cage 11 doivent être dimensionnés pour permettre un léger recul de la bille 20 dans la cage 21.

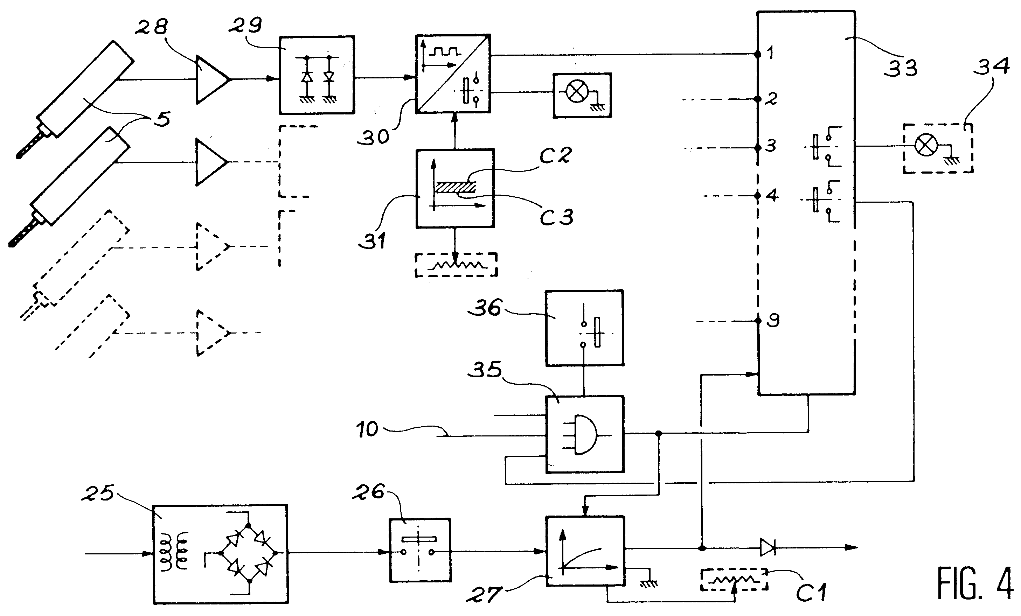

Sur la figure 3, ont été représentées schématiquement les neuf broches de perçage 5 agencées en carré et les quatre billes 20, ainsi que leur cage 21. Elles ont été placées chacune entre quatre broches de perçage. On peut ainsi assurer une pression constante et symmétrique sur la pièce à percer, lors des efforts de coupe appliqués par les neuf forets. Ceci n'est évidemment qu'un exemple de réalisation et d'agencement des moyens de maintien de la pièce à percer.

Sur cette figure 3, de même que sur la figure 2, on a représenté deux cloisons ajourées 24, disposées à l'intérieur du volume interne 8. Ces deux cloisons ajourées 24 ont pour but de créer une sorte de labyrinthe vis-à-vis de la circulation de l'huile, de manière à imposer un parcours relativement compliqué à cette dernière. Le but de cette disposition est d'essayer d'homogénéiser le refroidissement des broches 5 par l'huile, en évitant que certaines parties du volume interne 8 ne soit que très peu refroidi par une faible circulation d'huile à cet endroit précis.

La tête d'usinage selon l'invention permet donc le perçage d'un très grand nombre de trous se trouvant sur une même pièce et étant espacés de façon régulière. De plus, le montage de la tête d'usinage selon l'invention sur une machine à commande numérique dite "à cinq axes" permet ainsi de cribler régulièrement de trous une surface gauche ou de géométrie relativement compliquée.

L'usinage d'un panneau ou d'une peau acoustique utilisée à l'intérieur d'une virole d'un turboréacteur impose de percer plusieurs dizaines de milliers de trous d'un diamètre de l'ordre de 1,5 millimètre très resserrés les uns des autres. Les forets utilisés sont donc relativement minces et fragiles et la probabilité d'évènements d'un accident d'usinage tel que la cassure d'un foret et les conséquences qu'il entraîne (bris d'outil dans l'espace d'usinage) sont relativement grandes.

Il s'avère donc utile, dans le cas où le perçage d'une telle pièce se fait automatiquement de façon programmée, de prévoir la détection d'un incident de perçage, pour éviter de continuer le programme de perçage avec par exemple un foret de cassé. En effet, compte tenu du très grand nombre de trous, il s'avèrerait très prejudiciable de laisser continuer à travailler de façon automatique la tête d'usinage, alors qu'un des neufs forets se trouverait cassé. Ceci entraînerait le perçage ultérieur de tous les trous qui n'auraient pas été usines par le foret cassé.

A cet effet, et en référence à la figure 4, on prévoit, dans le cadre de l'utilisation d'electrobroches, de surveiller le courant utilise dans chacune des broches.

Sur cette même figure 4, apparaît un circuit de mise en marche de la tête d'usinage ou de montée en vitesse des electrobroches. En effet, pour qu'une électrobroche fonctionne correctement à une vitesse de rotation de quarante mille tours par minute, il est indispensable de réchauffer lentement l'ensemble de l'électrobroche pour que la graisse des roulements à billes puisse se repartir correctement. Il y a donc lieu de faire tourner à vide les différentes electrobroches de la tête d'usinage à différents paliers progressifs de vitesse de rotation. Par exemple, il s'avère très intéressant de faire tourner les broches à dix mille tours par minute pendant trente minutes, puis à vingt mille tours par minute pendant cinq minutes et à trente mille tours par minute pendant cinq minutes. Après quoi, la vitesse de trente sept à quarante mille tours par minute peut être atteinte. D'autre part, pour différents paramètres, par exemple la température de stockage de l'huile de refroidissement, cette procédure de montée en vitesse n'est pas répétitive. Il est donc intéressant de programmer à l'avance cette montée en vitesse pour qu'elle soit effectuée de manière correcte la première fois.

On distingue donc sur la figure 4 une source de courant électrique 25 qui alimente un générateur de rampe 27 commande par un premier interrupteur de mise en marche 26. En fonction d'une première consigne C1, le générateur de rampe 27 commande le circuit d'alimentation du moteur de chaque électrobroche 5 de façon progressive et par palier. La sortie de ce générateur de rampe 27 est également connectée à un comparateur général 33. Ce dernier reçoit également un signal d'autorisation de mise en marche issu d'une porte ET qui centralise les différents paramètres de fonctionnement de la machine (en l'occurrence, la température de l'huile par l'intermédiaire du thermocouple 10, la consigne de fin de cycle de montée en vitesse issue de ce comparateur général 33).

De ce fait, lorsque la vitesse de rotation des broches, la température de l'huile et le deuxième interrupteur 36 permettent l'usinage, un premier témoin de contrôle 34, branche à la sortie du comparateur principal 33, est activé. L'usinage peut alors commencer.

Pendant la phase d'usinage, le générateur de rampe est bien sûr court-circuité par la sortie de la porte ET 35.

Pendant l'usinage, chacun des courants traversant le moteur de chacune des broches est analysé. En effet, un amplificateur 28 envoie ce courant dans un comparateur de seuil 30 par l'intermédiaire d'un limiteur de courant 29. Un générateur de consigne 31 définit deux valeurs de courant C₂ et C₃ délimitant une plage de courant de fonctionnement. En d'autres termes, si le courant dépasse la valeur supérieure, ceci signifie que le moteur de l'électrobroche correspondante 5 consomme trop de courant et qu'il s'est donc produit un accident durant la coupe, le foret réclamant une force de coupe supérieure. Des bris d'outils peuvent ainsi avoir été introduits dans le trou opposant une résistance mécanique à la rotation du foret. Un deuxième témoin de signalisation 32 est ainsi activé. Le limiteur de courant 29 limite alors automatiquement le courant dans l'électrobroche correspondante 5. Il en est de même lorsque le courant consommé par le moteur d'une électrobroche 5 se trouve en dessous de la consigne inférieure. Ceci peut vouloir signifier que le foret a été cassé et qu'il n'existe pratiquement plus d'effort s'opposant à la rotation de la broche correspondante. Dans ce cas également, il s'agit d'interrompre le programme d'usinage.

Le comparateur général 33 surveille ainsi tous les courants traversant les moteurs des électrobroches 5 et peut ainsi définir un état de fonctionnement normal de la machine.

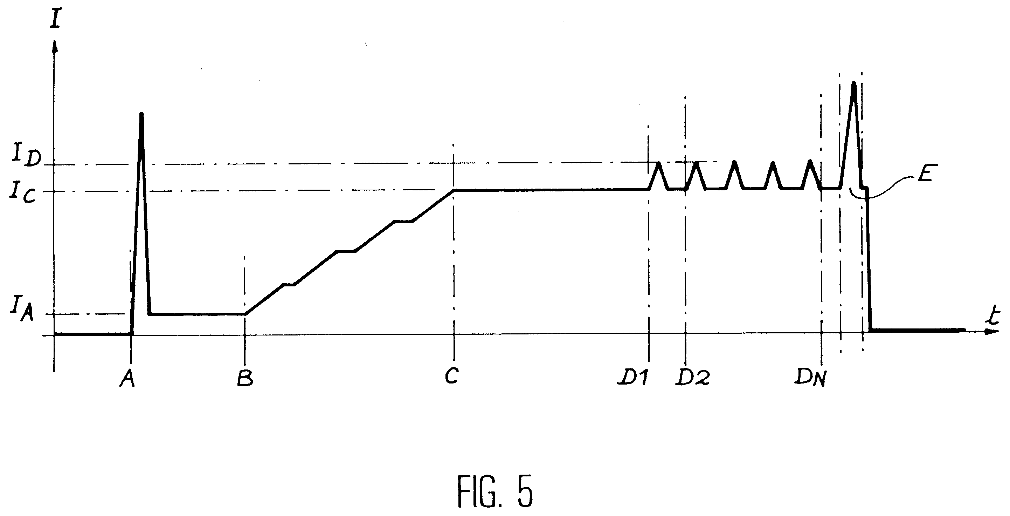

La courbe de la figure 5 représente la variation du courant traversant le moteur d'une électrobroche durant le cycle de montée en vitesse d'une broche de la tête d'usinage selon l'invention et pendant l'usinage lui-même dans le cas où se produit une rupture de l'outil correspondant.

Au point A, s'effectue la mise en marche de la tête d'usinage. Un appel brutal de courant s'effectue dans l'électrobroche, puis se stabilise à une valeur I_{A} relativement faible correspondant à la rotation à vide et à faible vitesse de la broche.

Le point B indique l'autorisation du cycle automatique de montée en vitesse de rotation. Cette dernière s'effectue donc progressivement et éventuellement par paliers. Lorsque la vitesse de rotation de fonctionnement est atteinte au point C, le courant a une valeur déterminée I_{C}. Au point D₁ a lieu un premier usinage. Un faible appel de courant supplémentaire a lieu et le courant atteint une intensité I_{D} et redescend rapidement à la valeur de fonctionnement I_{C}. On procède ainsi à plusieurs usinages symbolisés par les points D₂ à D_{N}. Au point E, se produit un effort anormal sur le foret et celui-ci casse. Le courant dans la broche augmente et chute brutalement à la valeur 0 et la tête d'usinage doit être arrêtée suite à la signalisation de cet état par le deuxième témoin de signalisation.

On peut ainsi programmer un cycle automatique de montée en vitesse et un cycle de surveillance des différentes électrobroches de la tête d'usinage selon l'invention.

Ce système peut être installé dans une armoire de commande et le démarrage de l'ensemble peut être effectué par l'action sur un simple bouton poussoir, tel que le premier interrupteur 26, le deuxième interrupteur 36 étant supprimé.

On peut ainsi palier à différentes anomalies de fonctionnement pendant l'usinage. En effet, les surintensités de courant provoquées par un problème électrique sur l'alimentation des moteurs des électrobroches, ou par la rupture d'un foret, ou par un problème de fonctionnement du moteur seront aussitôt détectées par le comparateur de seuil 30. De même, des sous-intensités provoquées par la non-rotation d'une broche ou par sa rotation à faible consommation due à l'absence d'effort après la rupture d'un foret seront également aussitôt détectées.

Bien entendu, il est possible de prévoir un changement régulier de tous les outils d'une même tête d'usinage.

La tête d'usinage selon l'invention a été prévue pour effectuer des perçages sur des grandes surfaces. Bien entendu, les forets pourront être remplacés par d'autres outils à aléser ou à polir, le mode d'utilisation de la tête d'usinage selon l'invention n'étant pas changé, n'importe quel genre d'usinage pouvant être effectué sur des broches tournantes peut être effectué avec la tête d'usinage selon l'invention.

### AVANTAGES DE L'INVENTION

- Vitesse de rotation très élevée pouvant permettre la perforation de plaques composites en carbone en évitant ainsi le phénomène de délaminage.
- Perçage de très nombreux trous sur de grandes surfaces.
- Utilisation sur machine à commande numérique à cinq axes permettant de percer des pièces de grande dimension sur des surfaces complexes, mais définies géométriquement.
- Elimination de la poussière de carbone quand ce matériau compose la pièce à usiner.
- Maintien de la pièce à usiner lorsque celle-ci est constituée d'une plaque relativement mince.

## Revendications

1. Tête d'usinage multibroche pour usiner des pièces à structures composites, contenant des matériaux tels que le carbone, comprenant plusieurs unités d'usinage (5) à grande vitesse de rotation débouchant sur une même face d'extrémité (12) pour usiner conjointement plusieurs trous parallèles sur une même surface, comprenant, en outre, des moyens de soufflage constitués d'un circuit de distribution constitué principalement d'un flasque d'extrémité (13) qui entoure les extrémités (6) des broches (5) pour distribuer l'air contre ou le long des outils (7) montés à l'extrémité (6) des broches (5), caractérisée en ce qu'elle comprend des moyens d'aspiration de l'air autour de la face d'extrémité (12) où débouchent les broches (5), en ce qu'elle comprend des moyens de maintien de la pièce à usiner (11) solidaires de la tête d'usinage constitués par plusieurs billes (20) poussées chacune par un ressort (23) à force constante et susceptibles d'être ainsi reculées vers la tête d'usinage pendant que les outils (7) s'enfoncent dans la pièce à usiner (11), en ce que les unités d'usinage sont des broches électriques de perçage à hautes fréquences appelées "électrobroches" et en ce qu'elle comporte un bain d'huile (8) formé à l'intérieur du carter (13) de la tête d'usinage assurant une circulation d'huile entre une entrée d'huile (9A) et une sortie d'huile (9B) de manière à refroidir les broches (5).

2. Tête d'usinage selon la revendication 1, caractérisée en ce qu'elle comprend des cloisons ajourées (24) placées dans le volume interne (8) pour constituer un labyrinthe vis-à-vis de la circulation d'huile, afin d'homogénéiser le refroidissement des broches (5).

## Claims

1. Multi-spindle machining head for machining composite-structure components containing materials such as carbon, comprising several machining units (5) that operate at high rotational speed, these machining units protruding from the same end face (12) in order to machine jointly several parallel holes on the same surface, and furthermore comprising blowing means consisting of a distribution circuit consisting mainly of an end plate (13) which surrounds the ends (6) of the spindles (5) in order to distribute air against or along the tools (7) mounted at the end (6) of the spindles (5), characterized in that it comprises means for sucking away the air around the end face (12) from which the spindles (5) protrude, in that the machining head comprises means for holding the component (11) to be machined, these means being integral with the machining head and consisting of several balls (20), each pushed by a constant-force spring (23) and capable of thus being moved back towards the machining head while the tools (7) are pressing into the component (11) to be machined, and in that the machining units are electrical high-frequency drilling spindles called "electrospindles" and in that the machining head includes an oil bath (8) formed inside the casing (13) of the machining head, providing circulation of oil between an oil inlet (9A) and an oil outlet (9B) so as to cool the spindles (5).

2. Machining head according to Claim 1, characterized in that it comprises perforated partitions (24) placed within the internal volume (8) in order to form a labyrinth with respect to the oil circulation, so as to cool the spindles (5) homogeneously.

## Patentansprüche

1. Mehrspindelbearbeitungskopf zum Bearbeiten von Werkstücken mit Verbundstruktur, die Materialien wie Kohlenstoff enthalten,
mit mehreren mit hoher Drehgeschwindigkeit arbeitenden, in ein und derselben Stirnfläche (12) mündenden Bearbeitungseinheiten (5) zum gemeinsamen Bearbeiten mehrerer paralleler Löcher in ein und derselben Fläche,
sowie mit Gebläsemitteln, bestehend aus einem Verteilerkreis, der im wesentlichen von einem stirnseitigen Flansch (13) gebildet wird, der die Enden (6) der Spindeln (5) umschließt, um Luft gegen die und entlang der an den Enden (6) der Spindeln (5) montierten Werkzeuge zu verteilen,
**dadurch gekennzeichnet,**
daß Mittel vorgesehen sind zum Ansaugen der Luft um die Stirnfläche (12), in der die Spindeln (5) münden,
daß weiterhin mit dem Bearbeitungskopf fest verbundene Mittel zum Halten des zu bearbeitenden Werkstücks (11) vorgesehen sind, die aus mehreren Kugeln (20) bestehen, die jeweils von einer Feder (23) mit konstanter Kraft gedrückt werden und so gegen den Bearbeitungskopf (5) zurückgeschoben werden können, während die Werkzeuge (7) in das zu bearbeitende Werkstück (11) eintauchen,
daß die Bearbeitungseinheiten als "Elektrospindeln" bezeichnete Hochfrequenz-Bohrspindeln sind,
und daß im Innern des Gehäuses (13) des Bearbeitungskopfes ein Ölbad vorgesehen ist, das eine Ölzirkulation zwischen einem Öleinlaß (9A) und einem Ölauslaß (9B) zur Kühlung der Spindeln (5) ermöglicht.

2. Bearbeitungskopf nach Anspruch 1,
**gekennzeichnet durch**
im Innenvolumen (8) angeordnete gelochte Trennwände (24), die ein Labyrint für die Ölzirkulation bilden, um die Kühlung der Spindeln (5) zu vergleichmäßigen.
